# EUROPEAN PATENT SPECIFICATION

(11) **EP 2 267 988 B1**
(45) Date of publication and mention of the grant of the patent: **16.03.2016**
(21) Application number: 10012209.2
(22) Date of filing: 30.08.2006
(51) Int. Cl.: H04M 1/60

(54) **Hands free portable telephone**
Freisprechendes tragbares Telefon
Téléphone portable mains-libres

(30) Priority: 30.08.2005 JP 2005250337
(43) Date of publication of application: 29.12.2010
(62) Divisional of application: 06018126.0
(73) Proprietor: Kyocera Corporation, Kyoto-shi Kyoto 612-8501 (JP)
(72) Inventor: Satake, Masaomi, Yokohama-shi Kanagawa 224-8502 (JP)
(74) Representative: Sajda, Wolf E.

(56) References cited:
- EP-A- 1 283 633
- EP-A- 1 521 400
- EP-A- 1 578 091
- EP-A1- 1 585 293
- JP-A- 2002 300 648
- US-A1- 2004 043 786

## Description

### BACKGROUND OF THE INVENTION

### 1. Field of the Invention

The present invention relates to a portable telephone capable of making a phone call using a headset that is connected to the portable telephone wirelessly or through a wire.

### 2. Description of the Related Art

While users of portable telephones are driving vehicles, if the users make phone calls by holding the portable telephones by their hands, then these users relax their power of concentration with respect to driving operations and therefore make delayed judgments as to peripheral environments. As a result, there is the possibility that traffic accidents may occur. As one of the methods capable of performing phone calls without holding portable telephones by hands of users, a method for using a headset (namely, headphone equipped with microphone) has been proposed (refer to, for example, JP-A-2003-047 066).

As a method for connecting a headset with a portable telephone, following two connecting systems have been proposed: a wired system for connecting a cable terminal of the headset to a connection terminal of the portable telephone, and a wireless system for transmitting voice data by wireless manner. As the wireless system, for example, Bluetooth, infrared rays, FM modulation systems have been employed. In these wireless systems, normally, batteries are required in order to process wireless communication operations and amplify voice data in headsets.

When phone calls are made with using headsets, there is a possibility that the headsets become unusable due to some troubles. In a wired system, for example, the cable terminal of a headset can be disconnected from a connection terminal of a portable telephone, or a cable wire can be disconnected. In a wireless system, a wireless communication is interrupted when an object for cutting off electromagnetic waves is present between a portable telephone and a headset, or when a distance between a portable telephone and a headset is prolonged. Furthermore, in the wireless system, the battery energy of a headset can be consumed so that the headset has become unusable.

When phone calls are made with using headsets and the headsets become unusable due to some troubles, in related portable telephones, the phone call modes are automatically switched to handset modes.

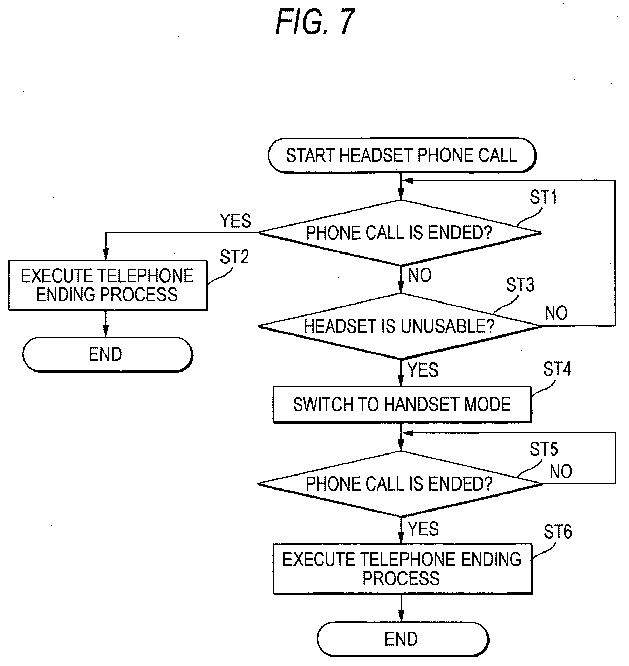

Fig. 7 is a flowchart for indicating an example of operations when a headset has become unusable while a phone call is made in a related portable telephone.

When a telephone end button is depressed while a phone call is made via either a wireless headphone or a wired headphone, a predetermined telephone ending process is executed to end the phone call (steps ST1 and ST2). Also, if the headset has become unusable while the phone call is made (step ST3), then the phone call mode is switched from a headset mode to a handset mode (step ST4). In the handset mode, a phone call is made with using an ear speaker and a microphone so that a user holds the portable telephone by his hand. When the telephone end button is depressed in the handset mode, a predetermined telephone ending process is executed to end the phone call (steps ST5 and ST6).

In the handset mode, the user has to hold the portable telephone in his hand while on the phone. As a consequence, if the headset mode is suddenly switched to the handset mode because the headset has become unusable while the user is on the phone using the headset, then the user has to take the portable telephone in his hand in order to continue the phone call. In other words, the user is forced to hold the portable telephone in his hand directly to continue the phone call. The user has to connect the cable terminal of the disconnected headset to the portable telephone, push the "handsfree" button of the portable telephone to switch the handset mode to the "handsfree" mode, etc.

If the user has to do these actions while driving, he is dislocated his concentration on driving.

On the other hand, when the above-explained switching from the headset mode to the handset mode occurs while a user behind the wheel makes a phone call with the head set, if the user leaves the portable telephone as it is to continue driving as a top priority (for example, user continues driving so as to find a place where he can park), then the telephone conversation may be interrupted without the intended party of this phone call understanding the present situation. EP1283633 and EP1521400 represent prior art as disclosed in preamble of claim 1.

### SUMMARY OF THE INVENTION

The present invention has been made in view of the above circumstances, and provides a portable telephone according to independent claim 1.

A portable telephone of the invention comprises: an interface required to connect the portable telephone to an external device for making a handsfree phone call; a control section, wherein when a failure occurs in the connection between the portable telephone and the external device while the handsfree phone call is made via the interface, the control section performs a phone call ending process on a communication line with an intended party of the handsfree phone call, and when the connection between the portable telephone and the external device via the interface is restored, the control section performs a telephone calling process to the intended party.

In the portable telephone of the invention, when the connection between the portable telephone and the external device via the interface is not restored and a predetermined amount of time is passed, the control section changes a phone call process for a subsequent telephone call reception into a phone call process by the portable telephone itself.

### BRIEF DESCRIPTION OF THE DRAWINGS

Fig. 1 is a diagram for showing an example of an arrangement of a portable telephone according to an exemplary embodiment of the present invention. Fig. 2 is a flowchart for representing an example of operations of a portable telephone when a phone call is made according to a first example. Fig. 3 is a flowchart for representing an example of operations of a portable telephone when a phone call is made according to the embodiment. Fig. 4 is a flowchart for representing an example of operations of a portable telephone when a phone call is made according to a second example. Fig. 5 is a flowchart for representing an example of operations of a portable telephone when a phone call is made according to a third example. Fig. 6 is a flowchart for representing an example of operations of a portable telephone when the telephone call is in an idle state according to a fourth example. Fig. 7 is a flowchart for representing an example of operations of a general-purpose portable telephone when a phone call is made.

### DESCRIPTION OF THE PRFERRED EMBODIMENTS

Referring now to drawings, five exemplary embodiments of the present invention will be described.

### FIRST EXAMPLE

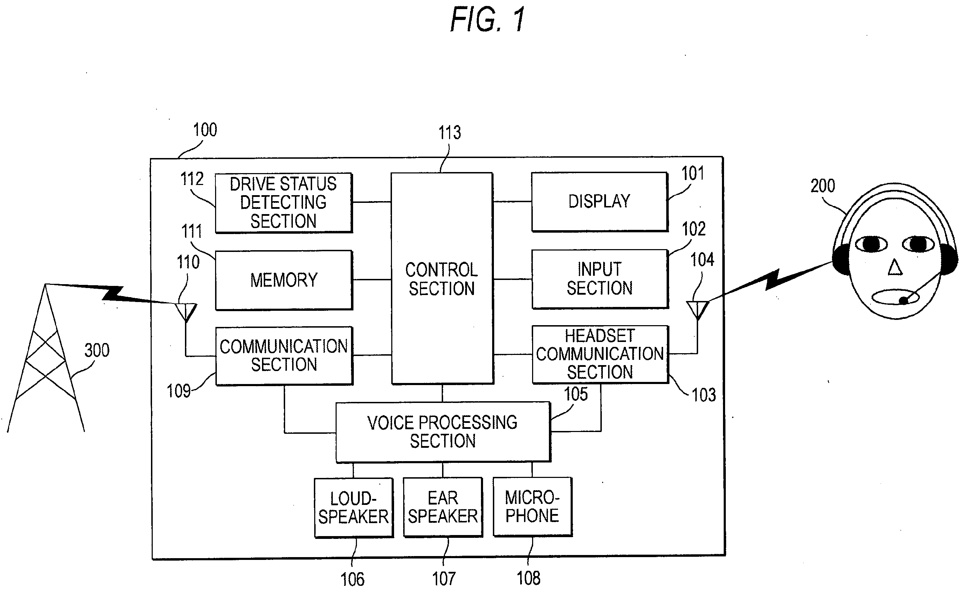

Fig. 1 is a diagram that indicates an example of an arrangement of a portable telephone 100 according to a first example.

The portable telephone 100 shown in Fig. 1 is provided with a display 101, an input section 102, a headset communication section 103, an antenna 104 that is used to communicate with a headset 200, a voice processing section 105, a loudspeaker 106, an ear speaker 107 a microphone 108, a communication section 109, an antenna 110 that is used to communicate with a base station 300, a memory 111, a drive condition detecting section 112, and a control section 113.

The display 101 includes a display device such as (for example) a liquid crystal display device, and displays thereon an image in response to an image signal supplied from the control section 113.

The input section 102 inputs an instruction issued from a user and various sorts of. The input section 102 is equipped with keys having various sorts of functions, for instance, numeric keys, character keys, arrow keys, and a confirmation key. When these keys are operated by the user, the input section 102 notifies operation contents of these keys to the control section 113.

The headset communication section 103 corresponds to an interface wherein a wireless communication is carried out with the headset 200 to transmit and receive a voice signal, a control signal, and the like, by transmitting and receiving electromagnetic waves via the antenna 104.

In other words, a voice signal derived from the voice processing section 105 is input into the headset communication section 103 which in turn transmits the entered voice signal to the headset 200 by way of a wireless communication. Also, various sorts of control signals, including a confirmation signal used to check a connection between the headset 200 and the portable telephone 100, are input into the headset communication section 103 from the control section 113 by way of a wireless communication.

Furthermore, the headset communication section 103 receives a voice signal which is produced in a microphone of the headset 200 through a wireless communication from the headset 200, and then outputs the received voice signal to the voice processing section 105. Also, the headset communication section 103 receives various sorts of control signals produced in the headset 200, including a command inputted by operating an operation key equipped in the headset 200 and a response signal responding to the above-described confirmation signal, through a wireless communication from the headset 200, and then outputs the received control signals to the control section 113.

The voice processing section 105 processes voice signals which are inputted in and outputted from the loudspeaker 106, the ear speaker 107, and the microphone 108.

In other words, the voice processing section 105 performs various sorts of signal processing operations such as an amplifying operation, an analog-to-digital converting operation, and a coding operation with respect to a voice signal inputted from the microphone 108 so as to convert the inputted voice signal into a digital voice signal, and then, transmits the digital voice signal from the communication section 109. Also, the voice processing section 105 performs various sorts of signal processing operations such as a decoding operation, a digital-to-analog converting operation, and an amplifying operation with respect to a voice signal of a phone call intended party that is received by the communication section 109 so as to convert the received voice signal into an analog voice signal, and then outputs the converted analog voice signal to the loudspeaker 106 and the ear speaker 107.

Also, the voice processing section 105 processes voice signals which are inputted in and outputted from the headset 200 when a phone call is made with the headset 200.

In other words, the voice processing section 105 performs a predetermined signal process with respect to a voice signal from the headset 200 that is received in the headset communication section 103, and then transmits the signal-processed voice signal from the communication section 109. Also, the voice processing section 105 performs a predetermined signal process with respect to a voice signal from a phone call intended party that is received in the communication section 109, and then transmits the signal-processed voice signal from the headset communication section 103.

The loudspeaker 106 and the ear speaker 107 respectively output sounds in response to the voice signals supplied from the voice processing section 105.

The loudspeaker 106 is used in order to output a sound having a relatively large volume. For instance, the loudspeaker 106 is used in order to output, for example, a ring tone, and voice of a phone call intended party during a handsfree phone call.

The ear speaker 107 is used to output a sound having a relatively small volume. For example, the ear speaker 107 is used to output the voice of a phone call intended party, at an ear of a user during a handset phone call. It should also be noted that both the loudspeaker 106 and the ear speaker 107 may be arranged to be commonly operated.

The microphone 108 collects sounds produced in a periphery thereof, converts the collected sounds into a voice signal, and then outputs the voice signal to the voice processing section 105.

The microphone 108 is mainly used to input voice of a user during a handsfree phone call and a handset phone call.

The communication section 109 performs a wireless communication with the base station 300 by transmitting and receiving electromagnetic waves via the antenna 110, and transmission and reception of phone call voice signals via a communication network (not shown) to another telephone is performed.

The memory 111 stores various data which are utilized in process of the control section 113 and data of the processed results of the control section 113. For example, the memory 111 stores a computer program of the control section 113, constant data which are employed in this process, variable number data which are temporarily stored during processing, telephone numbers, addresses of electronic mails, and various data (memorandum, schedule, etc.) which are inputted by a user.

Also, the memory 111 stores information related to a present phone call mode, and voice data which is employed when a switching operation of phone call modes is notified by voice.

The drive condition detecting section 112 detects a state of the portable telephone 100 relating to if the user of the portable telephone 100 is driving a vehicle, or if the user is riding on the vehicle.

For example, the drive condition detecting section 112 includes an acceleration sensor which senses acceleration applied to the portable telephone 100. Since acceleration generated by driving the vehicle is sensed by this acceleration sensor, the drive condition detecting section 112 can detect whether the user is driving the vehicle. Alternatively, the drive condition detecting section 112 may simply detect that a state such as a drive phone call mode is set by a user (which is a mode in which a user makes a phone call while driving a vehicle in accordance with a rule. For instance, the mode in which it is assumed to employ the handsfree phone call or the headset 200 so as to make a phone call.)

Also, the drive condition detecting section 112 may alternatively include a reading apparatus (a reader) for reading information from a radio chip such as an RFID tag (radio frequency identification tag) by short range communication. In this alternative case, since a radio chip into which predetermined input data has been written is mounted on a vehicle, the drive condition detecting section 112 may detect that the user is riding on the vehicle based upon information of the radio chip read by the reader.

Alternatively, the drive condition detecting section 112 may be equipped with a headset detecting section which detects whether a predetermined headset has been connected. In this alternative case, the drive condition detecting section 112 may detect that the user is riding on the vehicle by detecting the predetermined headset provided on the vehicle by the headset detecting section. A detection of the headset is performed based upon, for instance, model information and ID information, which are transmitted from the headset 200 by radio communication.

Also, the drive condition detecting section 112 may be equipped with a hand off time counter which counts the number of hand offs within a predetermined time. In this alternative case, the drive condition detecting section 112 utilizes the fact that a hand off frequently occurs when the portable telephone 100 is moved at a high speed, and the drive condition detecting section 112 may then detect that the user is driving the vehicle.

As a further alternative example, the drive condition detecting section 112 may be provided with a movement speed detecting section. The movement speed detecting section acquires information indicative of a geometrical position of a present position by the GPS system (Global Positioning System), and detects a movement speed of the portable telephone based upon a temporal change of the position that is indicated by the acquired information. Since the movement speed of the portable telephone becomes a higher speed by driving, and the drive condition detecting section 112 may detect that the user is driving the vehicle.

The control section 113 controls the overall operations of the portable telephone 100.

The control section 113 properly performs unified control operations of the following sections so that operations of the sections are executed appropriately in accordance with a predetermined sequential operation. The operations of the sections include : display of an image on the display 101; communication in the headset communication section 103 with the headset 200; the processing of the voice signal in the voice processing section 105; and communication in the communication section 109 with the base station 300.

The control section 113 determines whether or not the headphone 200 can be used.

The situations in which headset 200 becomes unusable (a failure occurs in the connection) include (for example): when a wireless communication cannot be performed because an object for cutting off electromagnetic waves is present between the portable telephone 100 and the headset 200; when a wireless communication cannot be performed because a distance between the portable telephone 100 and the headset 200 is prolonged and thus strengths of electromagnetic waves are lowered; and when the headset 200 cannot be operated because the energy of a battery has been consumed.

For instance, when no response signal is transmitted from the headset 200 with respect to a confirmation signal that is sent from the headset communication section 103 to the headset 200 periodically, the control section 113 determines that the headset 200 cannot be used.

Also, when the control section 113 receives from the headset 200 a notification signal for notifying that an operation is to be stopped due to a depletion of the remaining battery power, the control section 113 may determine that the headset 200 cannot be used.

The control section 113 determines whether or not the user of the portable telephone 100 is driving the vehicle based upon the detected result of the drive condition detecting section 112.

When the drive condition detecting section 112 is equipped with the acceleration sensor, the control section 113 performs a determination based upon a detected result of the acceleration sensor. For example, when the detected value of the acceleration sensor exceeds a predetermined threshold value, the control section 113 determines that the user is driving the vehicle. Alternatively, when a counting operation is performed as to how many times the detected value of the acceleration sensor exceeds the predetermined threshold value within a predetermined time duration, and when the counted value becomes larger than a predetermined amount, the control section 113 determines that the user is driving the vehicle.

When the drive condition detecting section 112 includes the reader of the radio chip, the control section 113 executes a determination based upon information of the radio chip read by this reader. In other words, when the information read by the reader is the information of the predetermined radio chip which is mounted on the vehicle, the control section 113 determines that the user is driving the vehicle.

When the drive condition detecting section 112 includes the above-described headset detecting section, the control section 113 performs a determination based upon a detected result of this headset detecting section. In other words, when the connection of the predetermined headset which is mounted on the vehicle is detected by the headset detecting section, the control section 113 determines that the user is driving the vehicle.

When the drive condition detecting section 112 includes the above-described hand off number counter, the control section 113 executes a determination based upon a total number of hand offs within a predetermined time, which is counted by the hand off number counter. For example, when the total number of hand offs within the predetermined time exceeds a predetermined number, the drive condition detecting section 112 determines that the user is driving the vehicle.

When the drive condition detecting section 112 includes the above-described movement speed detecting section, the control section 113 performs a determination based upon a movement speed detected by the movement speed detecting section. For example, when the detected movement speed exceeds a predetermined value, the control section 113 determines that the user is driving the vehicle.

Also, when the drive condition detecting section 112 detects that a state such as a drive phone call mode is set by a user, the control section 113 determines that the user is driving the vehicle in the drive phone call mode.

The control section 113 performs various sorts of processes related to the control of phone call conditions including, for instance, a switching operation of phone call modes.

The portable telephone 100 according to the first example includes 4 types of phone call modes (headset mode; handset mode; handsfree mode; and drive mode) (phone call process).

The headset mode is a mode (phone call process) in which a phone call is made by using the headset 200.

The handset mode is a mode (phone call process) in which a handset phone call is made by a main body of the portable telephone 100. The handset phone call is a phone call wherein the user makes a phone call while holding the portable telephone 100 in his hand, and the ear speaker 107 having the small sound volume equipped in the portable telephone 100 is used to output voice.

The handsfree mode is a mode (phone call process) wherein a handsfree phone call is made by the main body of the portable telephone 100. The handsfree phone call is a phone call that can be made by the user without touching the portable telephone 100, and the loudspeaker 106 having the large sound volume equipped in the portable telephone 100 is employed to output voice. Also, the sensitivity of the microphone 108 is also increased for the handsfree phone call.

The drive mode is a phone call process performed by the main body of the portable telephone 100, and is a mode (phone call process) which notifies an intended caller that a phone call cannot be established. For example, when a telephone call is received, a voice message such as "since user is driving a vehicle, user cannot pick up a phone. Please call again" is transmitted to notify the intended caller that the phone call cannot be established.

When the control section 113 determines that the headset 200 cannot be used while the phone call is made in the above-explained headset mode, the control section 113 switches this headset phone call mode into the handsfree mode.

Also, after the control section 113 has determined that the headset 200 cannot be used while the phone call is made in the above-explained headset mode, when the control section 113 determines that the headset 200 can be used again, the phone call mode is switched to the headset mode again.

It should be understood that the control section 113 performs the above-explained automatic switching operation of the phone call modes in response to the determination results by the control section 113 only when the user is driving the vehicle.

For instance, when the control section 113, based on a condition that the control section 113, determines that the user is driving the vehicle, the control section 113 performs the automatic switching operation of the phone call mode. When the control section 113 determines that the user is not driving the vehicle, the control section 113 does not execute the automatic switching operation of the phone call mode irrespective of the determination result in the control section 113.

As another example, when a predetermined input that indicates that the user is driving the vehicle is entered in the input section 102, the control section 113 may alternatively perform the automatic switching operation of the phone call mode. For example, when a predetermined button for indicating that the user is driving the vehicle is mounted on the input section 102, if this predetermined button is depressed, the control section 113 may perform the automatic switching operation of the phone call mode. When the predetermined button is not depressed, the control section 113 does not perform the automatic switching operation of the phone call mode irrespective of the control section 113.

Alternatively, the control section 113 may determine whether or not to perform the automatic switching operation of the phone call mode by considering both a determination result of the control section 113 and a predetermined input entered to the input section 102. For instance, even when the predetermined input is not entered to the input section 102, if it is determined in the determination result of the control section 113 that the user is driving the vehicle, the automatic switching operation of the phone call mode may be executed.

Also, when the control section 113 switches the phone call mode in response to the determination results of the control section 113, the predetermined voice related to the switching operations of the phone call modes is outputted from the loudspeaker 106.

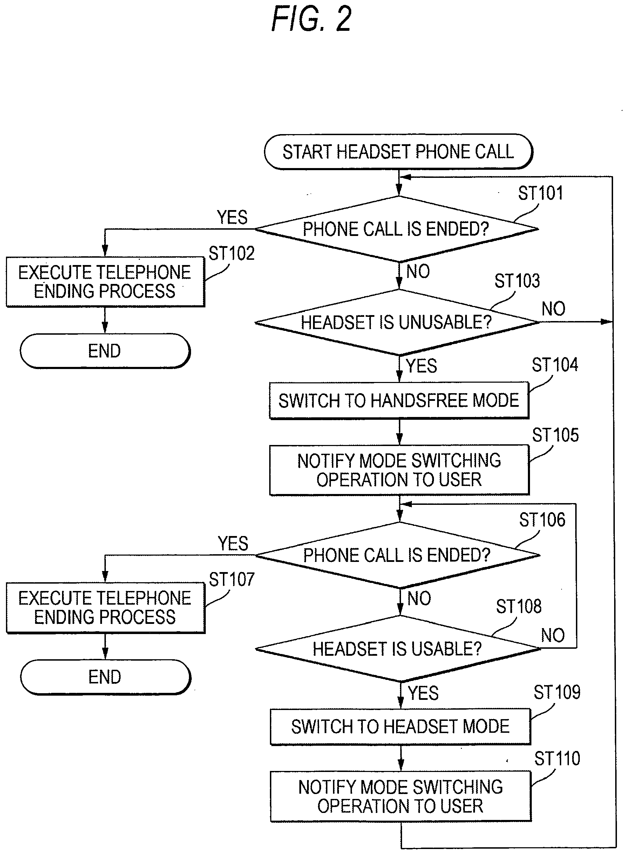

Referring now to a flowchart shown in Fig. 2, a description is made of operations as to the portable telephone 100 having the above-explained arrangement, according to the first example.

While a phone call is made in the headset mode, the control section 113 monitors a depression of a predetermined telephone end button provided on the input section 102 (step ST101). When the telephone end button is depressed, the control section 113 executes a predetermined telephone ending process to end the phone call (step ST102).

Also, when the phone call is made in the headset mode, if the control section 113 determines that the user is driving the vehicle, then the control section 113 monitors a determination result as to the usable status of the headset 200 (step ST103).

When the control section 113 determines that the headset 200 has become unusable, the control section 113 switches the phone call mode into the handsfree mode (step ST104). At this time, the control section 113 reads out predetermined voice data from the memory 111 and supplies the voice data to the voice processing section 105 to output a voice message that the phone call mode has changed to the handsfree mode from the loudspeaker 106 (step ST105). As a result, for instance, such a phone call mode switching announcement "since headset is disconnected, phone call mode is switched to handsfree mode" is outputted from the loudspeaker 106.

Even after the phone call mode has been switched from the headset mode to the handsfree mode, the phone call operation is continuously carried out.

Also, when the phone call is made in the handsfree mode, the control section 113 monitors a depression of the telephone end button of the input section 102 (step ST106). When the telephone end button is depressed, the control section 113 executes a predetermined telephone ending process to end the phone call (step ST107).

Also, when the phone call is made in the handsfree mode, if the control section 113 determines that the user is driving the vehicle, then the control section 113 monitors a determination result of the usable status of the headset 200 (step ST108).

When the control section 113 determines that the headset 200 is brought into a usable status (connection is recovered), the control section 113 switches the phone call mode to the headset mode (step ST109). At this time, the control section 113 reads out from the memory 111, a predetermined voice data for notifying the user that the phone call mode is returned to the headset mode , and then the read voice data is processed in the voice processing section 105 and is output from the loudspeaker 106 (step ST110). For instance, a phone call mode switching announcement "since communication operation with headset is recovered, phone call mode is switched to the headset mode" is outputted from the loudspeaker 106.

When the phone call mode is returned to the headset mode, the control section 113 continuously monitors a depression of the telephone end button and a determination result of the control section 113, and repeatedly performs the above-explained process.

As previously described, in accordance with the portable telephone 100 of the first example, when the phone call is performed in the headset mode, if the headset 200 has become unusable due to a certain trouble, then the phone call mode is automatically switched to the handsfree mode, and the user can continuously perform the phone call in a smooth manner without directly manipulating the portable telephone 100 by his hand. In other words, since the manipulation of the portable telephone 100 while driving is no longer required, the user can continuously perform the phone call by the handsfree phone call under comfortable conditions while ensuring safety.

Also, in accordance with the portable telephone 100 of the first example, after the control section 113 determines that the headset 200 has become unusable while the phone call is made in the headset mode, if the control section 113 determines that the headset 200 becomes usable again, then the phone call mode is automatically switched to the headset mode.

As a result, it is possible to avoid that the user forgets to receive an incoming call in the handsfree mode.

Also, when the headset 200 is returned to the usable status, the user can automatically restart the phone call without touching the portable telephone 100. More specifically, when a temporary communication failure occurs, a cumbersome operation may be omitted wherein the user stops the vehicle every time and manually sets the communication mode from the handsfree mode to the headset mode. As a consequence, usability can be improved.

Furthermore, in accordance with the portable telephone 100 of the first example, when the phone call mode is switched in response to the determination result of the control section 113, the predetermined voice message for notifying of the switching operation of the phone call mode is outputted from the loudspeaker 106.

As a result, since the user can clearly grasp the switching operation of the phone call mode, the user can continuously perform the phone call without being perplexed with respect to the change of the phone call mode.

It should also be noted that in the portable telephone 100 according to the first example, when the control section 113 determines that the headset 200 has become unusable while the phone call is performed in the headset mode, such a predetermined notification that the headset 200 has become unusable may be transmitted to a phone call intended party. For instance, a voice message such as "headset is disconnected" may be alternatively sent to a phone call intended party. As a result, the phone call intended party can clearly grasp the situation.

Also, in accordance with the portable telephone 100 according to the first example, when the control section 113 determines that the user is driving the vehicle, or when the input section 102 has entered a predetermined input which indicates that the user is driving the vehicle, the phone call mode is automatically switched.

As a consequence, while the user is not driving the vehicle, it is possible to avoid a situation in which the phone call mode switches automatically despite the user's intention.

### EMBODIMENT

Next, a description is made of an embodiment of the present invention.

In the above-described portable telephone 100 according to the first example, when the headset 200 has become unusable, the phone call mode is automatically switched to the handsfree mode. In contrast, when the headset 200 has become unusable in the portable telephone of the embodiment, a phone call is automatically ended.

The portable telephone according to this embodiment includes a similar arrangement to that of the previously explained portable telephone 100 according to the first example, and the difference between the portable telephones of the first example and the embodiment is in operations of the control section 113. As a consequence, only the control section 113 according to the embodiment will be described in the below-mentioned explanations.

When the control section 113 determines that the headset 200 is unusable while a phone call is made in the headset mode, the control section 113 ends the phone call.

After the control section 113 has ended the phone call as a result of the control section 113 determining that the headset 200 cannot be used, if the control section 113 determines that the headset 200 can be used again, then the control section 113 issues a telephone call with respect to the communication intended party of the phone call that was ended.

For instance, while a telephone number of a communication intended party is stored in the memory 111, when the control section 113 determines that the headset 200 cannot be used, the control section 113 ends the phone call. When the control section 113 determines that the headset 200 can be used again, the control section 113 reads out the telephone number of the phone call intended party stored in the memory 111, and then makes a telephone call by using this telephone number.

It is preferable that the control section 113 executes an automatic ending operation of a phone call or an automatic telephone calling operation in response to a determination result of the control section 113 only when the user is driving the vehicle.

A determination method for determining whether or not the user is driving the vehicle is similar to the above-explained determination method executed by the control section 113 according to the first example.

For example, when the control section 113 determines that the user is driving the vehicle or when a predetermined input for indicating that the user is driving the vehicle is entered to the input section 102, the control section 113 determines that driving of the vehicle is performed. The control section 113 performs the automatic ending operation of the phone call or the automatic calling operation in response to the determination result of the control section 113.

Further, when the control section 113 determines that the headset 200 has become unusable while the phone call is made in the headset mode, the control section 113 sends a predetermined notification for notifying the phone call intended party that the headset 200 has become unusable.

Also, when the control section 113 ends the phone call in response to the determination result of the headset 200, the control section 113 outputs a predetermined voice message for notifying the ending of the phone call from the loudspeaker 106.

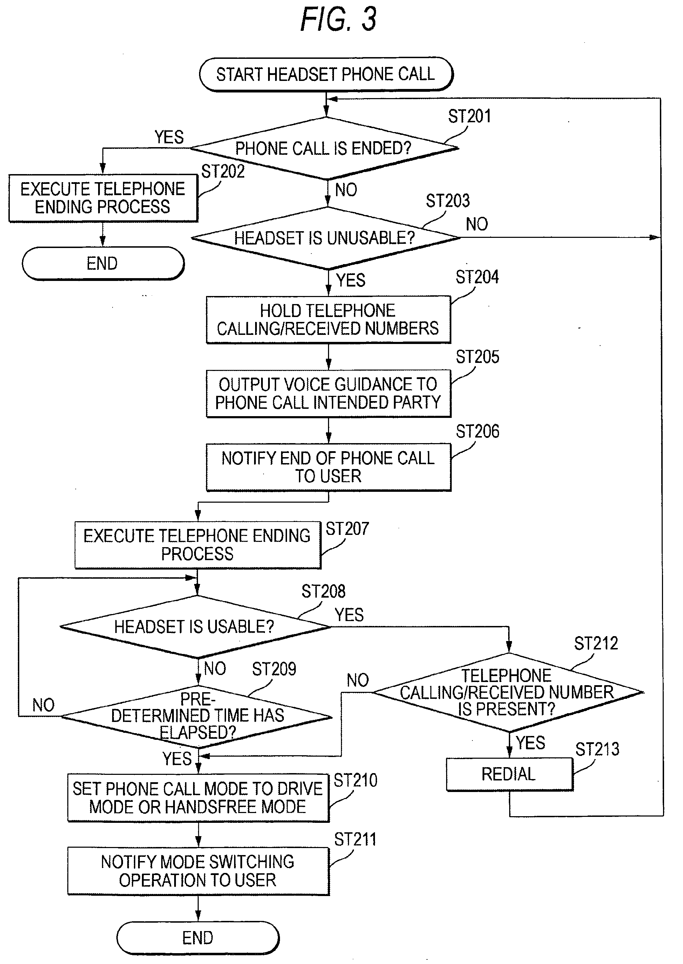

Referring now to a flowchart shown in Fig. 3, a description is made of operations as to the portable telephone having the above-explained arrangement, according to the embodiment.

When a phone call is made in the headset mode, the control section 113 monitors a depression of a predetermined telephone end button provided in the input section 102 (step ST201). When the telephone end button is depressed, the control section 113 executes a predetermined telephone ending process to end the phone call (step ST202).

When the phone call is made in the headset mode, if the control section 113 determines that the user is driving the vehicle, then the control section 113 monitors a determination result as to the usable status of the headset 200 (step ST203).

When the control section 113 determines that the headset 200 has become unusable, the control section 113 confirms whether or not a telephone number of a phone call intended party is stored in the memory 111 (step ST204).

Also, the control section 113 reads out predetermined voice data for notifying the ending of the phone call to the phone call intended party from the memory 111, transmits the read voice data from the communication section 109 to the phone call intended party (step ST205). As a result, for example, announcements such as "since headset is disconnected, phone call is ended. Please call later", and "since headset is disconnected, phone call is ended. Please call again" are issued to the phone call intended party.

Furthermore, the control section 113 reads out predetermined voice data for notifying the user of the ending of the phone call from the memory 111, and then, the read voice data is processed in the voice processing section 105 to output the processed voice message from the loudspeaker 106 (step ST206). As a result, for instance, an announcement such as "since headset is disconnected, phone call is ended" is outputted from the loudspeaker 106.

Then, the control section 113 executes a predetermined telephone ending process to end the phone call (step ST207).

After the phone call is ended, if the control section 113 determines that the user is driving the vehicle, then the control section 113 monitors a determination result of the usable status of the headset 200 (step ST208).

When the control section 113 determines that the headset 200 is usable (connection is recovered), the control section 113 confirms whether or not the telephone number of the phone call intended party when the phone call was ended in the step ST207 has been stored in the memory 111 (ST212). If this telephone number has been stored, then the control section 113 makes a telephone call by using this stored telephone number (step ST213). When the intended party picks up the telephone call in response to this telephone calling operation, a phone call is again commenced in the headset mode, and the above-described process is repeated. It should be understood that if the user makes a telephone call, then the information of the intended party such as the telephone number of the phone call intended party, or an IP address thereof is recorded as a telephone call history. If the intended party makes the telephone call, then the above-explained information of the intended party is recorded as a call reception history.

On the other hand, when a telephone calling person sets his telephone number in a non-notification mode and the telephone number of the phone call intended party has not been stored in the memory 111 (step ST212), or when a predetermined time has elapsed after the phone call is ended in the step ST207 (step ST209), the control section 113 switches the phone call mode to (for instance) either the drive mode or the handsfree mode (step ST210). The reason is that since the portable telephone has been brought (still set) into a telephone call waiting status in a state that a failure has occurred in the connection with the external device (headset 200), an incoming call notification, an incoming call response, and a phone call mode are set to use the external device (headset 200) even when an incoming call is received under this status. As a result, the user cannot recognize an incoming call for subsequent incoming calls. Therefore, if the connection with the external device (headset 200) does not recover, then the phone call mode with respect to the subsequent incoming calls has to be changed to the phone call mode by the main body of the portable telephone (which includes a phone call wherein the portable telephone automatically responds to the incoming call by outputting voice message, similar to drive mode). Then, a predetermined voice data for notifying the user of the switching operation of the phone call mode is read from the memory 111, and the voice data is processed in the voice processing section 105 and output from the loudspeaker 106 (step ST211).

As previously described, in the portable telephone of the embodiment, if the control section 113 determines that the headset 200 is unusable while the phone call is made in the headset mode, then the phone call is automatically ended. As a result, it is possible to prevent the user from directly operating the portable telephone by hand.

Also, in the portable telephone of the embodiment, after the control section 113 determines that the headset 200 cannot be used, the phone call is ended. Then, if the control section 113 determines that the headset 200 can be used again, the telephone calling operation is automatically performed with respect to the phone call intended party of the phone call that was ended. As a consequence, the phone call can be automatically restarted without the user directly manipulating the portable telephone. In particular, when the headset 200 is temporarily unusable, a cumbersome operation wherein the user stops the vehicle to again issue a telephone call can be avoided, and usability can be improved.

Further, in accordance with the portable telephone of this embodiment, when the control section 113 determines that the headset 200 cannot be used while the phone call is made in the headset mode, a notification that the telephone communication is ended since the headset 200 cannot be used is transmitted to the phone call intended party. As a consequence, since the phone call intended party can clearly grasp the situation, there is no confusion about the ending of the phone call.

Also, in the portable telephone of the embodiment, when the control section 113 determines that the headset 200 cannot be used while the phone call is made in the headset mode, a predetermined voice message related to the ending of the phone call is outputted from the loudspeaker 106. As a result, since the user of the portable telephone can clearly grasp the change in the phone call modes, the user need not be perplexed about the ending of the phone call. In addition, if the ending of the phone call can be understood, then confusion caused by the user not grasping the situation can be avoided. Thus, the user of the portable telephone can more easily take a proper action such as stopping the vehicle to restart the phone call.

Moreover, in the portable telephone of the embodiment, when the control section 113 determines that the user is driving the vehicle, or when the input section 102 has entered a predetermined input which indicates that the user is driving the vehicle, the phone call is automatically ended and the telephone calling operation is automatically carried out.

As a consequence, when the user is not driving the vehicle, it is possible to avoid a situation in which the phone call mode switches automatically despite the user's intention.

### SECOND EXAMPLE

Next, a second example of the present invention will be explained.

In a portable telephone according to the second example , when the headset 200 has become unusable, a phone call is automatically placed on hold.

The portable telephone according to this second example also includes a similar arrangement to that of the previously explained portable telephone 100 except that the control section 113. As a consequence, only the control section 113 of the second example will be described in the below explanation.

When the control section 113 determines that the headset 200 has become unusable while a phone call is made in the headset mode, the control section 113 holds the phone call. Also, when the control section 113 determines that the headset 200 cannot be used while the phone call is performed in the headset mode and places the phone call on hold, if the control section 113 determines that the headset 200 is usable again, then the control section 113 releases the hold.

Also, when the holding status is continued for a predetermined time after the phone call is placed on hold as a result of the control section 113 determining that the headset 300 cannot be used, the control section 113 ends the phone call.

However, the control section 113 performs the automatic ending of the automatic holding operation for the phone call only when the user is driving the vehicle.

A determination method for determining whether or not the user is driving the vehicle is similar to the above-explained determination method executed by the control section 113 according to the first example.

For example, when the control section 111 determines that the user is driving the vehicle, or when a predetermined input for indicating that the user is driving the vehicle is entered to the input section 102, the control section 113 determines that the vehicle is being driven. The control section 113 then performs the automatic ending operation of the phone call or the automatic holding operation of the phone call in response to the determination result of the usable status of the headset 200.

Further, when the control section 113 determines that the headset 200 is unusable while the phone call is made in the headset mode, the control section 113 sends a predetermined notification that the headset 200 is unusable to a phone call intended party.

Also, when the control section 113 places the phone call on hold in response to the determination result of the headset 200, the control section 113 outputs a predetermined voice message for notifying that the phone call is on hold from the loudspeaker 106.

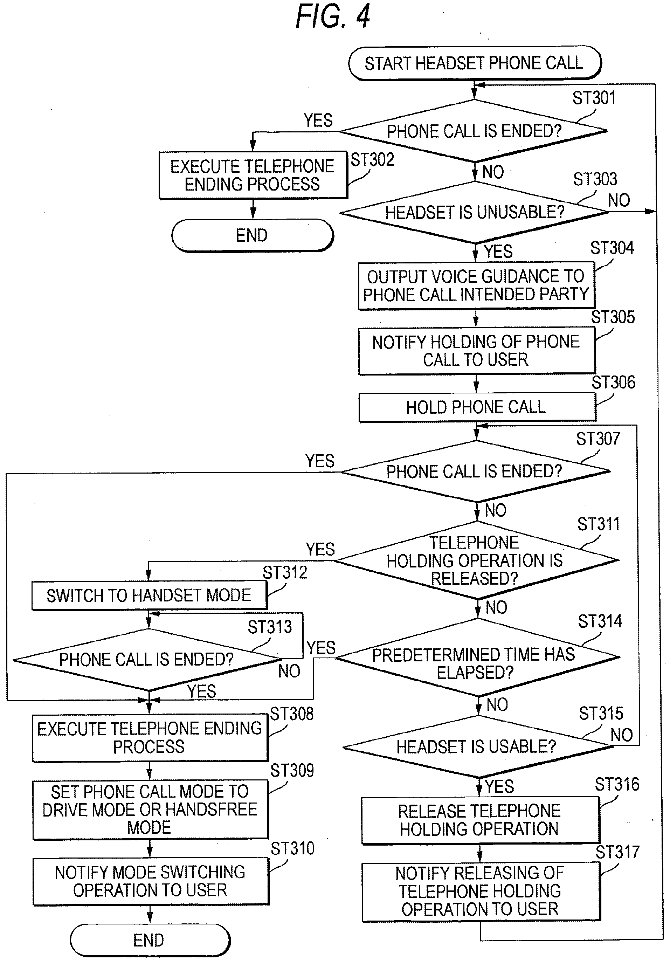

Referring now to a flowchart shown in Fig. 4, a description is made of operations of the portable telephone having the above-explained arrangement, according to the second example.

When a phone call is made in the headset mode, the control section 113 monitors a depression of a predetermined telephone end button provided in the input section 102 (step ST301). When the telephone end button is depressed, the control section 113 executes a predetermined telephone ending process to end the phone call (step ST302).

Also, when the phone call is made in the headset mode, if the control section 113 determines that the user is driving the vehicle, then the control section 113 monitors a determination result of the usable status of the headset 200 (step ST303).

When the control section 113 determines that the headset 200 has become unusable, the control section 113 reads out predetermined voice data for notifying a phone call intended party that a phone call is on hold from the memory 111, processes the voice data in the voice processing section 105, and then transmits the processed voice data from the communication section 109 to the phone call intended party (step ST304). As a result, for example, such an announcement "since headset is disconnected, phone call is on hold. Please wait for a moment" is issued to the phone call intended party.

Furthermore, the control section 113 reads out predetermined voice data for notifying the user that the phone call is on hold from the memory 111, processes the voice data in the voice processing section 105, and then outputs the processed voice data from the loudspeaker 106 (step ST305). As a result, for instance, an announcement such as "since headset is disconnected, phone call is on hold" is outputted from the loudspeaker 106.

The above-explained announcement is made, and the control section 113 places the phone call on hold (step ST306).

When the phone call is on hold, the control section 113 monitors a depression of the predetermined telephone end button provided in the input section 102 (step ST307). When the telephone end button is depressed, the control section 113 executes a predetermined telephone ending process to end the phone call (step ST308).

Also, when the phone call is on hold, the control section 113 monitors a depression of a predetermined phone call start button provided in the input section 102 (step ST311). When the phone call start button is depressed, the control section 113 releases the telephone hold and switches the phone call mode into the handset mode (step ST312). Then, the control section 113 monitors a depression of the telephone end button in the handset mode (step ST313). When the telephone end button is depressed, the control section 113 executes a predetermined telephone end process to end the phone call (step ST308).

In addition, when the phone call is on hold, the control section 113 monitors whether or not a predetermined time has elapsed after the holding operation was commenced (step ST314). After the predetermined time has elapsed since the holding operation was commenced and the control section 13 determines that the user is driving the vehicle, the control section 113 executes a predetermined telephone ending process to end the phone call (step ST308).

When the phone call is ended in the step ST308, the control section 113 switches the phone call mode to (for example) the drive mode or the handsfree mode (step ST309). At this time, the control section 113 reads out from the memory 111 a predetermined voice data for notifying the user that the phone call mode is switched. The read voice data is processed in the voice processing section 105 and is output from the loudspeaker 106 (step ST310).

On the other hand, when the phone call is on hold, if the control section 113 determines that the user is driving the vehicle, then the control section 113 monitors a determination result of the usable status of the headset 200 (step ST315).

When the control section 113 determines that the headset 200 is usable (connection is recovered), the control section 113 releases the hold operation of the phone call (step ST316). At this time, the control section 113 reads out from the memory 111 a predetermined voice data for notifying the user that the hold operation of the phone call is released. The voice data is processed in the voice processing section 105 and output from the loudspeaker 106 (step ST317). For instance, a telephone hold releasing announcement such as "since communication with headset is recovered, phone call holding operation is released" is outputted from the loudspeaker 106.

When the phone call mode is returned to the headset mode, the control section 113 continuously monitors a depression of the telephone end button and a determination result of the usable status of the headset 200, and repeatedly performs the above-described process.

As previously described, in the portable telephone of the second example, while the phone call is performed in the headset mode, if the control section 113 determines that the headset 200 has become unusable, then the phone call is automatically placed on hold. As a result, it is possible to prevent the user from directly operating the portable telephone by his hand. Also, when the user is driving the vehicle, the phone call can be placed on hold without touching the portable telephone until the user stops the vehicle to operate the portable telephone. As a result, the phone call can be continued while ensuring safety.

Further, in the portable telephone of the second example , when the control section 113 determines that the headset 200 cannot be used and after the phone call has been placed on hold for a period longer than a predetermined time, the phone call is automatically ended. As a result, it is possible to prevent the user from forgetting to turn OFF the portable telephone, and also possible to suppress a telephone charge caused by the holding operation for a long time.

Also, in the portable telephone of the second example, after the control section 113 determines that the headset 200 has become unusable while the phone call is made in the headset mode, if the control section 113 determines that the headset 200 is again usable, then the telephone holding operation is released.

As a result, when the headset 200 is returned to the usable status, the user can automatically restart the phone call without touching the portable telephone. More specifically, when a temporary communication failure happens to occur and the headset 200 cannot be used, a cumbersome operation wherein the user stops the vehicle each time and manually sets the communication mode from the handsfree mode to the headset mode can be omitted. As a consequence, usability can be improved.

Furthermore, in the portable telephone of the second example, when the control section 113 determines that the headset 200 is unusable while the phone call is performed in the headset mode, a predetermined notification that the headset 200 has become unusable and that the phone call is on hold is transmitted to a phone call intended party. As a result, the phone call intended party can clearly grasp the condition and does not need to be perplexed with the telephone holding operation.

Also, in the portable telephone of the second example , when the control section 113 determines that the headset 200 cannot be used while the phone call is made in the headset mode, a predetermined voice message related to the holding operation of the phone call is outputted from the loudspeaker 106. As a result, since the user of the portable telephone can clearly grasp that the phone call is on hold, the user need not be perplexed about the holding operation of the phone call. In addition,
if the holding operation of the phone call can be clarified, then confusion caused by the user not grasping the situation can be avoided. As a result, the user of the portable telephone can easily take a proper action such as stopping the vehicle to restart the phone call.

Moreover, in the portable telephone of the second example , when the control section 113 determines that the user is driving the vehicle, or when a predetermined input which indicates that the user is driving the vehicle is entered in the input section 102, the phone call is automatically ended or the phone call is automatically placed on hold.

As a consequence, while the user is not driving the vehicle, it is possible to prevent the phone call mode from automatically switching, or being automatically placed on hold, or being automatically ended, despite the user's intention.

In the example of Fig. 4, when the control section 113 determines that the predetermined time has elapsed after the holding operation was commenced in the step ST314, the process of the control section 113 is moved to the step ST308 to end the phone call. Alternatively, when the phone call is ended, a message may be sent to notify the phone call intended party.

Also, after the phone call has been ended in the step ST308, when the control section 111 determines that the headset 200 can be used again, the control section 113 may make a telephone call to the phone call intended party. As a result, the user can automatically restart the phone call without directly manipulating the portable telephone by his hand, which improves usability.

### THIRD EXAMPLE

Next, a third example will now be explained.

In a portable telephone according to this third example , while a phone call is automatically held when the headset 200 has become unusable, if the movement of the portable telephone is stopped because the vehicle is stopped, then the phone call is switched to either the handset mode or the handsfree mode.

The portable telephone according to this third example includes a similar arrangement to that of the previously explained respective portable telephones according to the respective examples and embodiment except for the drive condition detecting section 112 and the control section 113. As a consequence, only the drive condition detecting section 112 and the control section 113 according to this third example will be described in the below-mentioned explanations.

The drive condition detecting section 112 detects a condition of the portable telephone, particularly a movement condition of the portable telephone, related to the fact that the user of the portable telephone is driving the vehicle. The drive condition detecting section 115 includes, for instance, the above-described acceleration sensor, hand off time counter, movement speed detecting section, and the like.

When the control section 113 determines that the headset 200 is unusable while a phone call is made in the headset mode, the control section 113 places the phone call on hold. Also, when the control section 113 places the phone call on hold, a notification that the phone call is placed on hold since the headset 200 cannot be used is transmitted to the phone call intended party. Also, a predetermined voice message related to the telephone holding operation is also outputted from the loudspeaker 106.

It should be noted that when the control section 113 determines that the user is not driving the vehicle, the control section 113 switches the phone call mode to the handset mode and the above-explained telephone holding operation is not carried out.

Also, while the above-explained telephone holding operation is carried out, if the control section 113 determines that the headset 200 can be used again, then the control section 113 switches the phone call mode to the headset mode and releases the telephone holding operation.

On the other hand, when the control section 113 determines that the user is not driving the vehicle during the above-described telephone holding operation, the control section 113 switches the phone call mode to either the handset mode or the handsfree mode.

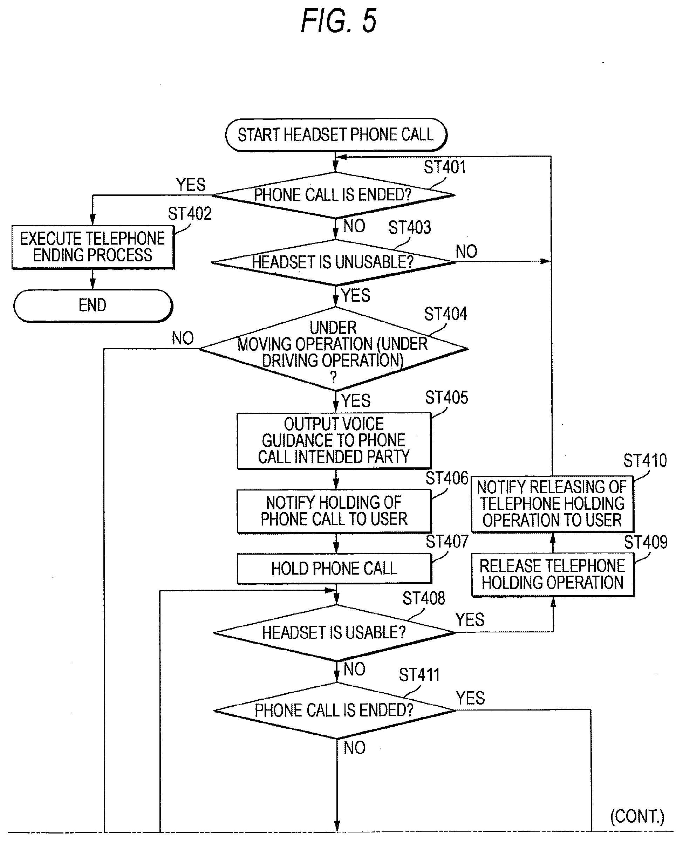

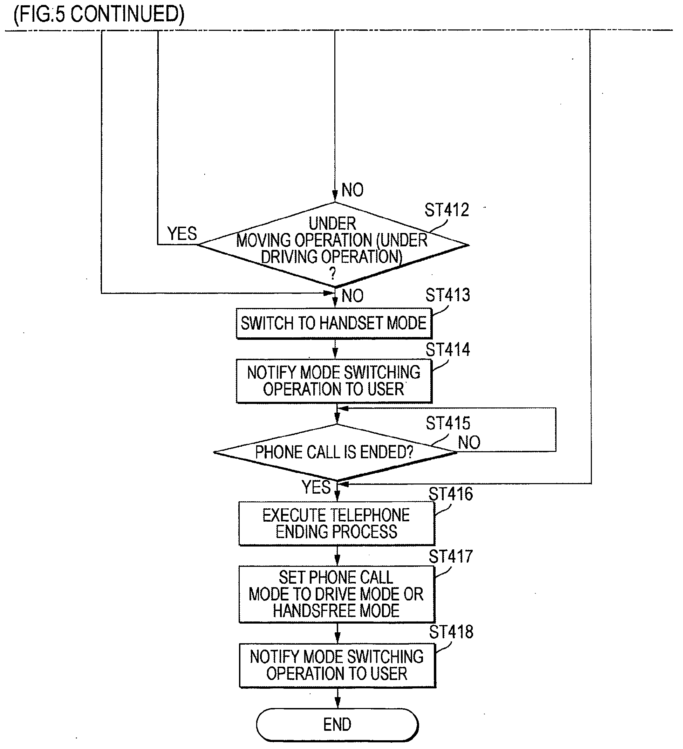

Referring now to a flowchart shown in Fig. 5, a description is made of operations as to the portable telephone having the above-explained arrangement, according to the third example.

When a phone call is made in the headset mode, the control section 113 monitors a depression of a predetermined telephone end button provided on the input section 102 (step ST401). When the telephone end button is depressed, the control section 113 executes a predetermined telephone ending process to end the phone call (step ST402).

Also, when the phone call is made in the headset mode, the control section 113 monitors a determination result of the usable status of the headset 200 (step ST403).

When the control section 113 determines that the headset 200 has become unusable, the control section 113 switches the phone call mode into the handset mode (step ST413) if the control section 113 determines that the user is not driving the vehicle (step ST404).

On the other hand, when the headset 200 has become unusable, if the control section 113 determines that the user is driving the vehicle (step ST404), then the control section 113 places the phone call on hold.

That is, the control section 113 reads out a predetermined voice data for notifying the phone call intended party of the telephone holding operation from the memory 111, and processes the voice data by the voice processing section 105 to transmit the processed voice data from the communication section 109 to the phone call intended party (step ST405). As a result, for example, an announcement such as "since headset is disconnected during driving operation, phone call is on hold. Please wait for a moment until vehicle is stopped" is outputted to the phone call intended party.

Also, the control section 113 reads out a predetermined voice data for notifying the user of the telephone holding operation from the memory 111, and processes the voice data by the voice processing section 105 to transmit the processed voice data from the loudspeaker 106 (step ST406). As a result, for example, an announcement such as "since headset is disconnected, phone call is on hold. Please stop vehicle" is outputted from the loudspeaker 106.

After such announcements are made, the control section 113 places the phone call on hold (step ST407).

When the control section 113 places the phone call on hold, the control section 113 monitors a determination result of the usable status of the headset 200 (step ST408).

When the control section 113 determines that the headset 200 is usable (connection is recovered), the control section 113 releases the holding operation of the phone call (step ST409). At this time, the control section 113 reads out a predetermined voice data for notifying the user that the holding operation of the phone call is released from the memory 111, and then the read voice data is processed in the voice processing section 105 to output a predetermined voice message from the loudspeaker 106 (step ST410). For instance, a telephone hold releasing announcement such as "since communication operation with headset is recovered, telephone holding operation is released" is outputted from the loudspeaker 106.

When the telephone holding operation is released, the control section 113 repeatedly carries out the above-explained processes of the steps ST401 and ST403.

Also, when the control section 113 places the phone call on hold, the control section 113 monitors a depression of a predetermined telephone end button provided in the input section 102 (step ST411). When the telephone end button is depressed, the control section 113 executes a predetermined telephone ending process to end the phone call (step ST416).

Further, when the control section 113 places the phone call on hold, if the user stops the vehicle and the control section 113 determines that the user is not driving the vehicle, then the control section 113 switches the phone call mode to the handset mode (step ST413).

When the phone call mode is switched to the handset mode in the step 413, the control section 113 reads out predetermined voice data for notifying this mode switching operation from the memory 111, and processes the voice data by the voice processing section 105 to output the voice message from the loudspeaker 106 (step ST414).

When the phone call is made in the headset mode, the control section 113 monitors a depression of the telephone end button (step ST415). When the telephone end button is depressed, the control section 113 executes a predetermined telephone ending process to end the phone call (step ST416).

When the phone call is ended in the step ST416, the control section 113 switches the phone call mode into the handsfree mode or the drive mode (step ST417). Then, the control section 113 reads out predetermined voice data to notify the user of a switching in the phone call mode from the memory 111 and processes the voice data in the voice processing section 105 to output a voice message from the loudspeaker 106 (step ST418).

As previously described, in the portable telephone of the third example, when the phone call is placed on hold, since the headset 200 is usable, if the movement of the portable telephone is stopped by the user stopping the vehicle, then the control section 113 determines that the user is not driving the vehicle (otherwise, determines that vehicle is stopped), and thus, the phone call mode is automatically switched to either the handset mode or the handsfree mode. As a consequence, even when the headset 200 has become unusable while the user is driving the vehicle, the user can easily restart the phone call without touching the portable telephone by his hand by merely stopping the vehicle.

Also, in the portable telephone of the third example , when the headset 200 can be used again while the phone call is on hold, the telephone holding operation is released, so that usability can be improved.

Moreover, in the portable telephone of the third example, when the headset 200 has become unusable and the phone call is placed on hold, this is notified to the phone call intended party. As a result, the phone call intended party can clearly grasp the situation. Also, since a voice message that the phone call is on hold is outputted from the loudspeaker 106, the user can also clearly grasp the situation.

It should also be noted that if the telephone holding operation is continuously carried out for a predetermined time, then the control section 113 may alternatively end the phone call. In other words, since the control section 113 determines that the headset 200 is unusable, when the telephone holding operation is continued for a predetermined time after the phone call is on hold, this phone call may be alternatively ended. As a result, it is possible to prevent the user from forgetting to turn OFF the portable telephone, and also possible to suppress a telephone charge caused by the continuing holding operation for a long time.

### FOURTH EXAMPLE

Next, a fourth example will now be explained.

In the portable telephones according to the above-described examples and embodiment, the operations made during phone calls were described. In the portable telephone of this fourth example , operations during telephone waiting conditions will be described. That is, when the control section 113 determines that the headset 200 is unusable when the user of the portable telephone is waiting to receive a telephone call in the headset mode, the control section 113 switches the phone call mode into either the handsfree mode or the drive mode.

It should be understood that the portable telephone according to the fourth example defines operations when the portable telephones according to the above-explained examples and embodiment wait to receive telephone calls, and includes a similar arrangement of these portable telephones.

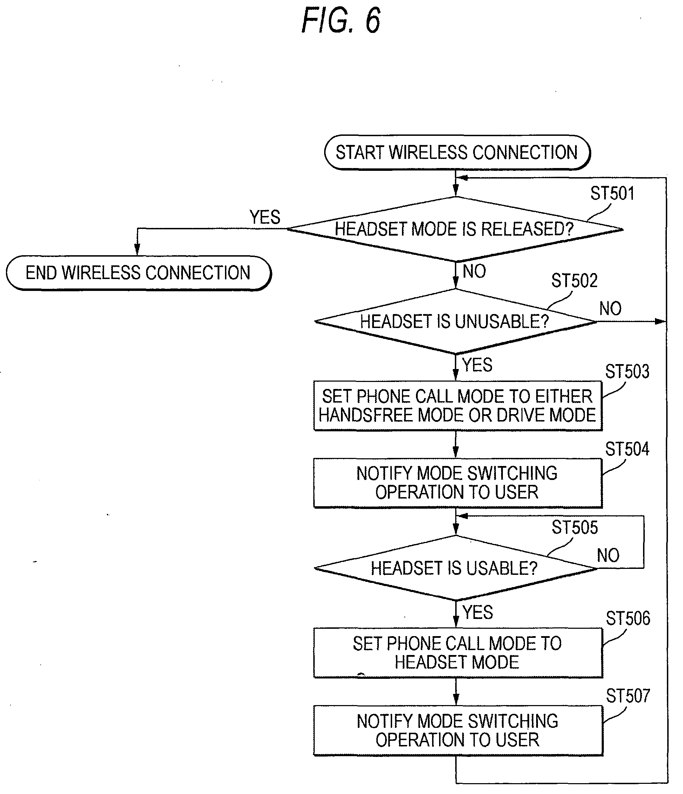

Fig. 6 is a flowchart for describing an example of processes when the portable telephone according to the fifth embodiment waits a telephone call.

When a communication between the portable telephone 100 and the wireless type headset 200 is commenced in the headset mode, the control section 113 monitors whether or not a predetermined input operation for instructing a releasing operation of the headset mode is entered to the input section 102 (step ST501). When the control section 113 determines that the releasing operation of the headset mode is instructed by the input operation, this control section 113 controls the headset communication section 103 to stop the wireless communication with the headset 200.

Also, the control section 113 monitors a determination result as to the usable status of the headset 200 (step ST502). When the control section 113 determines that the headset 200 has become unusable, the control section 113 sets the phone call mode into either the handsfree mode or the drive mode (step ST503). Then, the control section 113 reads out predetermined voice data for notifying the user that the phone call mode is switched from the memory 111, processes the voice data in the voice processing section 105, and then outputs the processed voice data from the loudspeaker 106 (step ST504).

After the phone call mode is changed, the control section 113 continuously monitors a determination result of the usable status of the headset 200 (step ST505). When the control section 113 determines that the headset 200 can be used again (connection is recovered), The phone call mode is returned to the headset mode (step ST506). Then, the control section 113 reads out a predetermined voice data for notifying the user that the communication telephone mode has been returned to the headset mode from the memory 111, processes the voice data by the voice processing section 105, to outputs the processed voice data from the loudspeaker 106 (step ST507).

As previously described, in the portable telephone of the fourth example, if the control section 113 determines that the headset 200 is unusable while an incoming call is waited in the headset mode, if the control section 113 determines that the headset 200 is unusable, then the phone call mode is automatically switched to either the handsfree mode or the drive mode. As a result, it is possible to avoid a situation wherein although the headset 200 cannot be used, the user misleads himself that the headset mode is in a waiting state and thus forgets to pick up the incoming call.

Also, when the phone call mode is switched because the headset 200 is unusable, the voice message for notifying this communication mode switching operation is outputted from the loudspeaker 106. As a result, the user can clearly grasp the situation.

While several examples and embodiment of the present invention have been described, the present invention is not limited only to the above-described example and embodiment, and may be realized by employing various modifications.

For example, in the above-explained examples and embodiment , an example that the wireless type headset is connected to the portable telephone has been exemplified. The present invention is not limited only to this example, and a wired type headset may be connected to the portable telephone instead. A failure occurring in the wired communication includes, for example, when a cable terminal of the wired type headset is disconnected from the connection terminal of the portable telephone, or when the cable terminal line is disconnected resulting in the unusable condition so that voice cannot be inputted and outputted from the headset. This unusable condition may be detected by checking a response of a periodic confirmation signal similar to that of the wireless type headset, or by detecting whether a current is flowing through a connection terminal of the portable telephone.

Also, in the above-explained example and embodiment, preferably, after the predetermined time has elapsed since the unusable condition of the headset was detected, the mode switching operation, the phone call holding operation, and the like are performed. As a result, the operation of the portable telephone cannot follow an instantaneous interruption or a connection/disconnection with respect to the headset with a higher sensitivity, and thus frequent mode switching operations may be suppressed.

It should also be noted that although the above-described examples and embodiment have explained "headset" as one example, the technical idea as to the external device capable of performing the handsfree phone call, according to the present invention, includes a device capable of performing a phone call with a portable telephone by being connected to the portable telephone by either a wireless method or a wired method. For instance, this external device may cover a handsfree device kit. A wireless transmission/reception adaptor (for instance, Bluetooth adaptor) connected to an interface (terminal) of a portable telephone that allows a phone call by a wireless method may also be included. In this case, the portable telephone may perform a mode switching operation by receiving a mode switching instruction or a connection condition from the wireless transmission/reception adaptor.

In the portable telephones according to the above-described examples and embodiment, the control section 113 may be alternatively realized by a computer which executes processes in accordance with a program. Alternatively, at least a portion of the control section 113 may be comprised of hardware. Also, as to processes of other sections of the control section 113, at least a portion thereof may be executed by the computer of the control section 113. Furthermore, the processes of the control section 111 may be executed by employing a computer, or a plurality of computers in parallel.

It will be apparent to those skilled in the art that various modifications and variations can be made to the present invention without departing from the scope of the invention. Thus, it is intended that the present invention cover all modifications and variations of this invention consistent with the scope of the appended claims.

## Claims

1. A portable telephone (100) comprising:
- an interface (104) required and adapted to connect the portable telephone (100) to an external device (200) for making a handsfree phone call; and
- a control section (113),
- wherein when a failure occurs in the connection between the portable telephone (100) and the external device (200) while the handsfree phone call is made via the interface (104), the control section (113) is adapted to perform a phone call ending process on a communication line with an intended party of the handsfree phone call,
**characterized in that**:
- when the connection between the portable telephone (100) and the external device (200) via the interface (104) is restored, the control section (113) is adapted to perform a telephone calling process to the intended party.

2. The portable telephone (100) as claimed in claim 1,
wherein when the connection between the portable telephone (100) and the external device (200) via the interface (104) is not restored and a predetermined amount of time has passed, the control section (113) is adapted to change a phone call process for a subsequent telephone call reception into a phone call process by the portable telephone (100) itself.

## Patentansprüche

1. Mobiltelefon (100), das Folgendes aufweist:
- eine Schnittstelle (104), die erforderlich und dazu ausgelegt ist, das Mobiltelefon (100) mit einer externen Einrichtung zu verbinden, um ein Freisprech-Telefongespräch zu führen; und
- eine Steuereinheit (113),
- wobei dann, wenn ein Fehler in der Verbindung zwischen dem Mobiltelefon (100) und der externen Einrichtung (200) auftritt, während ein Freisprech-Telefongespräch über die Schnittstelle (104) geführt wird, die Steuereinheit (113) dazu ausgelegt ist, einen Telefongespräch-Beendigungsprozess auf einer Verbindungsleitung mit einem beabsichtigten Partner für das Freisprech-Telefongespräch durchzuführen,
**dadurch gekennzeichnet,**
**dass** dann, wenn die Verbindung zwischen dem Mobiltelefon (100) und der externen Einrichtung (200) über die Schnittstelle (104) wiederhergestellt ist, die Steuereinheit (113) dazu ausgelegt ist, einen Telefongespräch-Anrufprozess zu dem beabsichtigten Partner durchzuführen.

2. Mobiltelefon (100) nach Anspruch 1,
wobei dann, wenn die Verbindung zwischen dem Mobiltelefon (100) und der externen Einrichtung (200) über die Schnittstelle (104) nicht wiederhergestellt wird und eine vorbestimmte Zeitdauer verstrichen ist, die Steuereinheit (113) dazu ausgelegt ist, einen Telefongespräch-Anrufprozess für einen anschließenden Telefongespräch-Empfang in einen Telefongespräch-Anrufprozess durch das Mobiltelefon (100) selbst umzuwandeln.

## Revendications

1. Téléphone portable (100) comprenant:
- une interface (104) exigée et adaptée à connecter le téléphone portable (100) à un dispositif externe (200) pour effectuer un appel téléphonique mains libres ; et
- une unité de commande (113),
- dans lequel, quand une défaillance se produit dans la connexion entre le téléphone portable (100) et le dispositif externe (200) alors que l'appel téléphonique mains libres est mené via l'interface (104), l'unité de commande (113) est adaptée à exécuter une procédure de terminaison d'appel téléphonique sur une ligne de communication avec un interlocuteur voulu de l'appel téléphonique mains libres,
**caractérisé en ce que**:
- quand la connexion entre le téléphone portable (100) et le dispositif externe (200) via l'interface (104) est rétablie, l'unité de commande (113) est adaptée à exécuter une procédure d'appel téléphonique vers l'interlocuteur voulu.

2. Téléphone portable (100) selon la revendication 1,
dans lequel, quand la connexion entre le téléphone portable (100) et le dispositif externe (200) via l'interface (104) n'est pas rétablie et qu'une durée temporelle prédéterminée s'est écoulée, l'unité de commande (113) est adaptée à changer une procédure d'appel téléphonique pour la réception d'un appel téléphonique ultérieur en une procédure d'appel téléphonique par le téléphone portable (100) lui-même.
